# EUROPÄISCHE PATENTSCHRIFT

(11) **EP 3 386 426 B1**
(45) Veröffentlichungstag und Bekanntmachung des Hinweises auf die Patenterteilung: **16.09.2020**
(21) Anmeldenummer: 16813055.7
(22) Anmeldetag: 05.12.2016
(51) Int. Cl.: A61C 8/00

(54) **DENTALIMPLANTATSYSTEM**
DENTAL IMPLANT SYSTEM
SYSTÈME D'IMPLANT DENTAIRE

(30) Priorität: 08.12.2015 CH 17862015
(43) Veröffentlichungstag der Anmeldung: 17.10.2018
(73) Patentinhaber: Z-Systems AG, 4702 Oensingen (CH)
(72) Erfinder: THOMKE, Ernst, 2540 Grenchen (CH); STAUDENMANN, Roger, 3292 Busswil b. Büren (CH); DI GIROLAMO, Rubino, 6315 Oberägeri (CH)
(74) Vertreter: Frei Patent Attorneys
(86) Internationale Anmeldenummer: PCT/CH2016/000153
(87) Internationale Veröffentlichungsnummer: WO 2017/096494

(56) Entgegenhaltungen:
- EP-A1- 2 347 729
- DE-A1-102010 051 176
- US-A1- 2008 261 176
- US-A1- 2013 004 915
- US-A1- 2013 224 689

## Beschreibung

Die Erfindung bezieht sich auf das Gebiet der Medizinaltechnik. Sie bezieht sich auf ein Dentalimplantatsystem, ein Dentalimplantat sowie ein Dentalimplantatset.

Unter den Dentalimplantatsystemen sind zweiteilige Implantatsysteme verbreitet. Diese besitzen das eigentliche Implantat (Auch "Verankerungsteil" oder, wenn es mit einem Gewinde versehen ist, "Schraube" genannt) und ein zur Befestigung daran vorgesehenes Aufbauteil ("Abutment"). Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und der vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion, also einer Krone, Brücke oder Prothese oder dergleichen, dient, wird in zweiteiligen Implantatsystemen durch das Abutment gebildet.

Bone-level-Implantatsysteme zeichnen sich durch eine besonders grosse Flexibilität aus. Sie ermöglichen, dass nach dem Implantieren und i.A. nach dem Einheilen alles, was aus dem Knochen herausschaut durch Auswahl und/oder Anpassung von Aufbauteil und Suprakonstruktion praktisch ohne Einschränkungen individualisiert Als Implantatmaterialien sind nebst dem bewährten Titan keramische Materialien von zunehmender Bedeutung, darunter insbesondere Zirkonoxidkeramiken (auch, wissenschaftlich nicht ganz korrekt, als "Zirkon" bezeichnet). Keramikimplantate haben aufgrund ihrer Farbe ästhetische Vorteile; ausserdem begünstigen sie besonders gut die Integration von Knochen- und Gingivagewebe an der Implantatoberfläche und stossen oft auf eine bessere Akzeptanz bei Patienten als metallische Implantate. Sie haben aber den Nachteil, dass sie sprödhart sind und im Gegensatz zu den duktileren metallischen Implantaten bei grosser mechanischer Belastung - eine solche gibt es insbesondere beim Eindrehen - zu Sprödbrüchen neigen, weshalb auch nicht sämtliche Implantatformen ohne Weiteres fertigbar sind. So hat sich beispielsweise bisher kein keramisches zweiteiliges "bone level"-Implantatsystem etablieren können. Dies wohl insbesondere weil sich beim Eindrehen des Implantats am Knochengewebe mittels Eindrehwerkzeug am koronalen Ende grosse Abscherkräfte ergeben können. Solche Abscherkräfte könne eine Ursache für die genannten Sprödbrüche sein. Am koronalen Ende ist oft die Materialstärke aufgrund einer nach koronal offenen Aussparung ("Innenbohrung"), in welche das Abutment eingreift, besonders dünn.

EP 2 347 729 zeigt ein Zahnimplantat, ein Abutment sowie ein Implantationsset. Zum Set gehört auch ein Abformelement, welches eine Kontaktfläche aufweist, die auf dem Stirnrand des Implantats aufsteht. US 2013/0004915 zeigt eine Anordnung mit Dentalimplantat, bei welchem das Dentalimplantat eine innere Aussparung aufweist, die eine Drehsicherungsstruktur bildet. Diese ist sowohl für den Eingriff eines Eindrehwerkzeugs als auch für den Eingriff einer entsprechenden Struktur des Abutments vorgesehen.

Es ist eine Aufgabe der vorliegenden Erfindung, ein Implantatsystem mit einem Verankerungsteil aus einem keramischen Werkstoff zur Verfügung zu stellen, welches Nachteile aus dem Stand der Technik überwindet, und welches insbesondere im Vergleich zum Stand der Technik eine verbesserte Stabilität beim Eindrehen ermöglicht, auch dann, wenn das Verankerungsteil eine geringe Wandstärke aufweist und bspw. ein subgingival zu implantierendes ("bone level"-) Verankerungsteil ist.

Gemäss der Erfindung wird ein Dentalimplantatsystem zur Verfügung gestellt, welches aufweist:
- Ein Verankerungsteil zur Verankerung in Knochengewebe, wobei das Verankerungsteil aus einem keramischen Werkstoff gefertigt ist,
- Wobei das Verankerungsteil ein Aussengewinde, welches eine Achse definiert, und eine zu einem koronalen Ende hin offene Aussparung für einen Eingriff eines Befestigungspfostens eines Abutments aufweist,
- Und ein Eindrehwerkzeug,
- Wobei die Aussparung eine Innenstruktur mit einer Eindrehgeometrie zum Zusammenwirken mit einer entsprechenden Aussenstruktur des Eindrehwerkzeugs aufweist, und wobei das Eindrehwerkzeug eine Eingriffpartie mit der entsprechenden Aussenstruktur besitzt,
- Wobei die Aussparung ferner koronal der Eindrehgeometrie einen sich bis zum koronalen Ende erstreckenden Abstützbereich bildet, zum Abstützen einer Abstützpartie des Abutments am Verankerungsteil.
- Wobei das Eindrehwerkzeug in einer Eindrehposition, in welcher die Eingriffpartie in die Eindrehgeometrie eingreift, relativ zum Verankerungsteil gegenüber axialen Relativbewegungen fixierbar ist,
- Und wobei das Eindrehwerkzeug in der Eindrehposition in seiner Orientierung relativ zum Verankerungsteil durch das Zusammenwirken der Eindrehgeometrie und der Eingriffpartie geführt wird und ein Drehmoment am Eindrehwerkzeug den Abstützbereich nicht belastet.

Der Umstand, dass ein Drehmoment am Eindrehwerkzeug den Abstützbereich nicht belastet, bedeutet, dass die Drehmomentübertragung zwischen Eindrehwerkzeug und Verankerungsteil apikal des Abstützbereichs stattfindet, und beim Eindrehen zwischen Eindrehwerkzeug und Abstützbereich keine wesentlichen Kräfte an Grenzflächen zwischen Eindrehwerkzeug und Abstützbereich auftreten. Es ist jedoch nicht ausgeschlossen, dass sich Eindrehwerkzeug und Abstützbereich lokal ohne wesentliche Kraftübertragung berühren. Ebenfalls nicht ausgeschlossen ist, dass zwischen Abstützbereich und Eindrehgeometrie ein weiterer Bereich vorhanden ist, welchen ein Drehmoment am Eindrehwerkzeug belasten kann.

Das Implantatsystem kann ferner das Abutment mit dem Befestigungsposten aufweisen, welcher die genannte Abstützpartie aufweist, die in ihrer Form passgenau auf den Abstützbereich abgestimmt ist.

Die Erfindung beruht auf der Erkenntnis, dass bei Dentalimplantaten mit keramischem Verankerungsteil und Aussengewinde beim Einschrauben insbesondere die koronalen Bereiche dazu tendieren, beschädigt zu werden. Beispielsweise kann es beim Implantatsystemen aus dem Stand der Technik zu einem Absplittern von Teilen kommen, wenn der Implantologe beim Implantieren oder Nachjustieren keine genügend grosse Anpresskraft in axialer Richtung ausübt (bzw. ausüben kann), so dass das Eindrehwerkzeug abrutscht, oder wenn das Werkzeug nicht perfekt entlang der Achse ausgerichtet ist. Der erfindungsgemässe Ansatz bringt diesbezüglich einen substantiellen Vorteil, erstens weil ein Abrutschen aufgrund der axialen Fixierung nicht mehr möglich ist, und zweitens weil aufgrund der Führung durch die Eindrehgeometrie - durch die axiale Fixierung fixiert - sichergestellt ist, dass keine Kräfte am koronalen Abstützbereich angreifen.

Diese Vorteile wirken sich besonders dann sehr entscheidend aus, wenn zum koronalen Ende des Verankerungsteils hin die Wand zwischen der äusseren Oberfläche des Verankerungsteils und der Aussparung vergleichsweise dünn ist, was insbesondere bei bone-level-Implantaten sehr oft der Fall ist, weil eine gute mechanische Abstützung des Abutments am Verankerungsteil erfordert, dass die Aussparung einen vergleichsweise grossen Durchmesser hat, weil aber die äussere Abmessung des Implantats durch die klinischen Randbedingungen beschränkt wird.

Das Verankerungsteil kann daher insbesondere als bone-level-Verankerungsteil (subgingivales Implantat) ausgebildet sein, d.h. es gehört als Ganzes zum enossalen Teil des Implantatsystems und ist so geformt, dass es zum Versenken bis auf Knochenkammhöhe vorgesehen ist, was beispielsweise das Vorhandensein eines sich gegenüber dem Gewinde substantiell aufweitenden koronalen (transgingivalen) Bereichs ausschliesst.

Die Führung der Eingriffpartie durch die Eindrehgeometrie zusammen mit der axialen Fixierung ist insbesondere so ausgebildet, dass auch bei einer Kraft in eine beliebige radiale Richtung auf das proximale Ende des Eindrehwerkzeugs (welche ein Drehmoment um eine Achse senkrecht zur Achse des Verankerungsteils bewirkt, das heisst ein Wegknick-Moment) das entstehende Drehmoment von der Eindrehgeometrie aufgenommen wird und den Abstützbereich, insbesondere das koronale Ende, nicht belastet. Am koronalen Ende des Verankerungsteils, an der Mündung der Aussparung, zwischen Eindrehwerkzeug und Verankerungsteil gibt es keine Berührung zwischen Eindrehwerkzeug und Verankerungsteil.

Der Form der Aussparung im Abstützbereich und die Form des Eindrehwerkzeugs sind so aufeinander abgestimmt, dass, wenn das Eindrehwerkzeug in der Eindrehposition geführt und axial fixiert ist, entlang des Umfangs ein Spalt zwischen dem Eindrehwerkzeug und der Innenwand der Aussparung ausgebildet ist. Die Dicke (radiale Ausdehnung) des Spalts kann in Umfangrichtung konstant oder nicht-konstant sein; insbesondere kann der Querschnitt der Eingriffpartie nach proximal in den Bereich des Abstützbereichs fortgesetzt sein und daher an Orten, an denen die Eingriffpartie eine Einbuchtung bildet, der Spalt breiter sein als an Orten, an denen die Eingriffpartie einen Vorsprung bildet. Wenn der Abstützbereich zum Zusammenwirken mit einer konischen Abstützpartie des Abutments leicht konisch ist (mit einem Öffnungswinkel von zwischen 1° und 10°), kann bspw. das Eindrehwerkzeug im Bereich der Abstützpartie zylindrisch verlaufen, so dass sich ein solcher Spalt am koronalen Ende durch den unterschiedlichen Verlauf der entsprechenden Partien ergibt.

Damit sich ein Spalt ergeben kann, kann der Abstützbereich insbesondere am koronalen Ende in einer Projektion entlang der Achse in jeder radialen Richtung eine grössere Ausdehnung als die Eindrehgeometrie aufweisen, so dass es bei einem zylindrischen Verlauf des Eindrehwerkzeugs keine Berührung zwischen dem Eindrehwerkzeug und dem Eingang/der Mündung der Aussparung in der koronalen Endfläche gibt. Eine solche in jeder radialen Richtung grössere Ausdehnung ergibt sich zwangslos, wenn der Abstützbereich wie in diesem Text als Option diskutiert leicht konisch ist.

Die Aussparung ist insbesondere als Sackloch mit einer Öffnung in der proximalen Stirnseite des Implantates ausgebildet. Die Aussparung kann insbesondere apikal (distal) von der Eindrehgeometrie (welche ihrerseits distal vom Abstützbereich ist einen weiteren Bereich aufweisen, welcher der Fixierung des Eindrehwerkzeugs und auch des Abutments gegenüber axialen Relativbewegungen dient und welcher nachstehend noch eingehender beschrieben wird.

Die Anordnung der Eindrehgeometrie apikal des Abstützbereichs ermöglicht eine Kraftübertragung in einen schon während des Eindrehens enossal angeordneten Bereich. Nebst den obigen Vorteilen bewirkt das den weiteren Vorteil, dass dadurch einer Verwindung des Implantats vorgebeugt werden kann.

Die Eindrehgeometrie (d.h. der axiale Bereich (Eindrehgeometriebereich) der Aussparung, in welchem die Eindrehgeometrie angeordnet ist) kann zylindrisch, also mit einer parallel zur Drehachse verlaufenden Innenfläche, oder konisch, mit koronaler Aufweitung der Innenfläche, ausgebildet sein. Auch andere Verläufe wie leicht gekrümmte und/oder gestufte Verläufe sind möglich.

Die Drehachse kann mit der vorstehend erwähnten Achse zusammenfallen, welche vom Aussengewinde definiert wird, d.h. die Eindrehgeometrie wird im Allgemeinen zentral (in Bezug auf radiale Richtungen) im Implantat angeordnet sein.

Die Fixierung gegenüber axialen Relativbewegungen kann insbesondere durch einen Formschluss (in Bezug auf axiale Richtungen) bewirkt sein, speziell eine Verschraubung oder ein Bajonettverschlusssystem. Die entsprechende Fixierungsstruktur mit Hinterschnitt (bspw. Gewinde) ist beispielsweise apikal der Eindrehstruktur vorhanden.

Für die Fixierung gegenüber axialen Relativbewegungen durch einen Formschluss kann ein vom Eindrehwerkzeug separates Fixierungselement, insbesondere eine Fixierungsschraube vorhanden sein, welche in die Fixierungsstruktur eingreift. Eine solche Fixierungsschraube (oder, bei einem Bajonettverschlusssystem ein Fixierungsstift mit einem funktionsgemäss ausgebildeten Vorsprung oder einer entsprechenden Aussparung) kann durch eine zentrale axiale Durchgangsöffnung (Schraubenkanal) im Eindrehwerkzeug geführt sein und einen proximalen (koronalen) Kopf aufweisen, mit welchem das Eindrehwerkzeug am Verankerungsteil fixiert wird. Insbesondere kann das Fixierungselement, gegebenenfalls durch seinen Kopf, das Eindrehwerkzeug gegen das Verankerungsteil sichern, bspw. indem dieses gegen das Verankerungsteil geklemmt wird. Bei Ausführungsformen, in denen das Fixierungselement eine Schraube ist, kann bspw. durch Einschrauben des Fixierungselements das Eindrehwerkzeug zwischen dem Kopf (bzw. generell einer eine nach distal gerichtete äussere Schulter) und einem Anschlag klcmmbar sein. Ein solches Klemmen kann im Wesentlichen kraftfrei geschehen.

Zum Bilden der Fixierungsstruktur kann das Implantatsystem zusätzlich zu den genannten Elementen ein Einsatzelement aufweisen, welches die Fixierungsstruktur als Innenstruktur, bspw. Innengewinde oder Bajonettkopplungsstruktur, besitzt. Ein solches Einsatzelement kann beispielsweise aus einem anderen Material als das Verankerungsteil gefertigt sein, insbesondere aus Metall, Spritzgusskeramik oder einem Kunststoff. Durch die Fixierungsstruktur ermöglicht das Einsatzelement nicht nur die Fixierung des Eindrehwerkzeugs, sondern auch die klebstofffreie Befestigung des Abutments nach dem Implantieren (und ggf. nach einem Einwachsprozess).

In Ausführungsformen mit einem solchen Einsatzelement ist apikal der Eindrehstruktur ein Einsatzbereich vorhanden, in welchen das Einsatzelement mindestens zum Teil eingesetzt bzw. einsetzbar ist. Der Einsatzbereich kann seinerseits einen Hinterschnitt aufweisen, damit das Einsatzelement dort formschlüssig in Bezug auf axialen Zug sicherbar ist. Insbesondere kann das Einsatzelement durch das Fixierungselement (z.B. Fixierungsschraube) und/oder selbsttätig aufgrund seiner Elastizität im Einsatzbereich aufspreizbar sein (und auch in letzterem Falle durch das Fixierungselement in dem aufgespreizten Zustand fixierbar sein). Das Einsatzelement kann bspw. mehrere durch Schlitze getrennte Segmente aufweisen, die radial bewegbar und in den Hinterschnitt aufspreizbar sind

In einer Gruppe von Ausführungsformen kann der Hinterschnitt konisch mit einem sich in apikaler Richtung erweiternden Querschnitt sein, wodurch sich eine besonders günstige flächige und kombiniert formschlüssig/kraftschlüssige Fixierung ergibt.

Das Einsatzelement kann zusätzlich zur in den Einsatzbereich eingreifenden Einsatzpartie einen in der Eindrehgeometrie geführten koronalen Kopfbereich aufweisen, welcher eine nicht rotationssymmetrische Aussenkontur aufweist und so im Zusammenspiel mit der Eindrehgeometrie das Einsatzelement in der Aussparung drehfest fixiert. Aufgrund dieses Ansatzes ist es möglich, dass der apikale Einsatzbereich ebenfalls drehsymmetrisch gefertigt ist und dass das Einsatzelement trotzdem auch dann beim Einschrauben der Fixierungsschraube bzw. der Abutmentschraube nicht mitdreht, wenn die Reibungskräfte nicht ausreichen, um das auf das Einsatzelement einwirkende Drehmoment zu kompensieren.

Eine konische Form des Einsatzbereichs ist bei der Tiefe, in welcher dieser in der Aussparung liegt, auch besonders günstig, wenn bei der Herstellung das Verankerungsteil mit abtragenden Verfahren (Bohren, Fräsen, Schleifen, etc.) in seine Form gebracht wird.

Zum Einbringen des Einsatzelements kann das System weiter ein Einsetzinstrument aufweisen, an welchem das Einsatzelement lösbar befestigbar ist, so, dass das am Einsetzinstrument befestigte Einsatzelement im Einsatzbereich positionierbar ist. Insbesondere wenn das Einsetzelement eine Innenbohrung mit der Fixierungsstruktur (Gewinde o.ä.) aufweist, kann das Einsetzinstrument so ausgebildet sein, dass das Einsatzelement daran befestigt bzw. befestigbar ist, ohne dass das Einsatzelement ggf. in der nach aussen gespreizten Position fixiert ist, so dass es durch einen Hals koronal vom Hinterschnitt einführbar ist. Insbesondere kann ein Befestigungszapfen des Einsetzinstruments, an welchem das Einsatzelement befestigt ist, die Innenbohrung nicht entlang ihrer ganzen Länge durchdringend ausgebildet sein, so dass am apikalen/distalen Ende des Einsatzelements eine aufspreizbare Partie - bspw. ggf. die Segmente - beim Einführen nach innen ausweichen kann.

Als Alternative zum Einsatzelement kann auch das Verankerungsteil selbst eine Fixierungsstruktur in Form eines Innengewindes oder einer Bajonettkopplungsstruktur aufweisen, in welches bzw. welche das Fixierungselement direkt eingreift. Eine solche Fixierungsstruktur kann insbesondere apikal der Eindrehgeometrie vorhanden sein.

Die Eindrehgeometrie kann in ihrem axialen Verlauf insbesondere zylindrisch, d.h. entlang der Achse translationssymmetrisch, sein oder bspw. auch konisch oder konkav oder eventuell konvex. Im Querschnitt senkrecht zur Achse ist die Eindrehgeometrie definitionsgemäss nicht rotationssymmetrisch. Insbesondere kann im Bereich der Eindrehgeometrie die Innenstruktur eine n-zählige Drehachse aufweisen, wobei n eine natürliche Zahl grösser 1 ist. Beispiele für Eindrehgeometrie-Querschnittsformen sind ein Oval, Vieleckformen (Dreieck, Viereck, Fünfeck, Sechseck, etc.), eventuell mit abgerundeten Ecken, ein Gleichdick, eine Stern- oder Blumenform, etc.

Die Aussenstruktur der Eingriffpartie des Eindrehwerkzeugs entspricht beispielsweise im Wesentlichen der Eindrehgeometrie, so dass ein passgenaues Einführen möglich ist; die Eindrehgeometrie und die Eingriffpartie können einander also in ihrer Querschnittform entsprechen. Es ist jedoch nicht ausgeschlossen, dass die Aussenstruktur des Eindrehwerkzeugs der Eindrehgeometrie nur bereichsweise folgt; beispielsweise muss sich die Eingriffpartie nicht notwendigerweise bis in äusserste Kanten erstrecken und/oder kann ein regelmässiges Aussen-Sechseck in ein gleichseitiges Dreieck eingepasst werden. Bevorzugt ist oft jedoch, dass eine möglichst grosse Kraftübertragungsfläche vorhanden ist.

Der Abstützbereich kann im Gegensatz zur Eindrehgeometrie rotationssymmetrisch sein. Insbesondere kann der Abstützbereich konisch, becherartig-konkav oder eventuell konvex sein; auch ein mindestens bereichsweise zylindrischer Verlauf ist möglich.

Der Abstützbereich kann das Abutment passgenau umschliessen, wodurch auch eine Abdichtung der Aussparung ermöglicht wird. Das Implantat kann im Abstützbereich insbesondere einen Innenkonus aufweisen, wobei das Abutment in einem distalen Bereich einen entsprechenden Aussenkonus aufweisen kann. Der Innenkonus und der Aussenkonus bilden je mindestens eine paarweise aufeinander angepasste konische Klemmfläche aus, wodurch das Implantat und das Abutment durch eine Klemmverbindung miteinander verbindbar sind.

Das Abutment weist in Ausführungsformen eine im zusammengesetzten Zustand in die Eindrehgeometrie eingreifende Verdrehsicherungsstruktur auf. Diese kann ebenfalls passgenau in die Eindrehgeometrie eingreifen. In alternativen Ausführungsformen kann vorgesehen sein, dass die Verdrehsicherungsstruktur eine x·n-zählige Drehsymmetrie um die Achse aufweist, wobei x eine natürliche Zahl grösser eins ist. In diesen Ausführungsformen ist eine Drehposition des Abutments in Bezug auf das Implantat durch eine Aufnahme der Verdrehsicherungsstruktur des Abutments in die Eindrehgeometrie des Implantats in n mal x diskreten Drehpositionen fixierbar. Das kann von Vorteil sein, wenn aus Gründen einer möglichst günstigen Krafteinleitung beim Eindrehen die Eindrehgeometrie eine niedrige Drehsymmetrie aufweist (bspw. eine bloss dreizählige); durch diesen Ansatz sind trotzdem viele mögliche Relativ-Drehpositionen möglich, was immer dann von Bedeutung sein kann, wenn das Abutment abgewinkelt ist oder eine sonst von der Drehsymmetrie um die Achse abweichende Struktur (abgesehen von der Drehsicherungsstruktur) hat.

In einer Ausführungsform kann die Eindrehgeometrie des Implantats eine dreizählige Drehachse und die Verdrehsicherungsstruktur des Abutments eine sechszählige Drehachse aufweisen. Die Eindrehgeometrie kann dabei als Dreieckszylinder und die Verdrehsicherungsstruktur als sechseckiger Zylinder ausgebildet sein. Anstelle eines Dreieck- bzw. Sechseckzylinders sind auch leicht konische oder anderswie sich in koronaler Richtung leicht aufweitende Strukturen mit entsprechender Grundfläche (im Wesentlichen dreieckig; im Wesentlichen sechseckig) denkbar. Anstelle von einer dreizähligen und einer sechszähligen Symmetrie eignen auch eine vier- bzw. achtzählige Symmetrie recht gut.

Das Verdrehspiel zwischen dem eingesetzten Abutment und dem Verankerungsteil und/oder das Verdrehspiel zwischen dem Eindrehwerkzeug und dem Verankerungsteil kann kleiner als 1° sein. Das geringe Verdrehspiel zwischen Abutment und Verankerungsteil kann in den entsprechenden Ausführungsformen dadurch begünstigt sein, dass die Symmetrie der Verdrehsicherung grösser ist als die Symmetrie der Eindrehgeometrie. Im Gegensatz dazu kann es bei einer gleichzähligen Drehachse von Eindreh- und Verdrehsicherungsgeometrie zu einem grossen Verdrehspiel kommen, da bereits geringe, fertigungsbedingte Abweichungen der Symmetrie ein passgenaues Einsetzen des Abutments erschweren können.

Das Dentalimplantatsystem kann zusätzlich eine Abutmentschraube mit Aussengewinde aufweisen, wobei das Abutment dann hülsenartig ausgestaltet ist und eine durchgehende Öffnung (einen Abutment-Schraubenkanal) aufweist. Die Abutmentschraube ist in die Öffnung des Abutments aufhehmbar und über das Aussengewinde am Implantat - insbesondere gegebenenfalls am Einsatzelement - befestigbar, wodurch das Abutment in an sich bekannter Art gegen das Implantat pressbar ist.

Für einen Einwachsprozes kann das Implantatsystem weiterhin eine Kappe aufweisen, über welcher nach dem Implantieren des Verankerungsteils die Gingiva vernäht wird, bis das Implantat (Verankerungsteil) eingeheilt ist, und/oder mindestens einen Gingivaformer, welcher temporär anstelle des Abutments am Verankerungsteil befestigt wird und ein Anwachsen der Gingiva in der später anzustrebenden Form ermöglicht. Kappe und/oder Gingivaformer können keramisch oder auch aus einem geeigneten Kunststoff gefertigt sein, auch metallische Ausführungen kommen für diese temporären Elemente in Frage.

Das keramische Material des Verankerungsteils (und in Ausführungsformen des Abutments) kann eine Oxidkeramik, bspw. eine Zirkonoxid-basierte Keramik sein, insbesondere eine Yttrium-stabilisierte Zirkonoxid-basierte Keramik. Auch Aluminiumoxid-basierte Keramiken sind verwendbar.

Ebenfalls Gegenstand der Erfindung sind ein Implantat, welches sich als Verankerungsteil für ein Implantatsystem der vorstehend beschriebenen Art eignet und die entsprechenden Eigenschaften aufweist, sowie die Kombination eines solchen Implantats mit einem Einsatzelement und optional mit Abutment und Abutmentschraube.

In diesem Text werden die Begriffe "koronal" und "apikal" in Bezug auf die Elemente des Implantatsystems so verwendet, wie sie für den implantierten Zustand, in welchem das Verankerungsteil in den Kieferknochen eingeschraubt ist und das Abutment (und ggf. die Suprakonstruktion) am Verankerungsteil befestigt ist, gelten, analog zum natürlichen Zahn, d.h. "apikal" ist die Richtung zur Wurzelspitze hin, ins Innere des Kieferknochens, "koronal" die entgegengesetzte Richtung zur Zahnkrone hin. "Proximal" und "distal" werden aus Sicht des Implantologen/Zahnarztes angewandt, d.h. die "distale" Richtung ist im implantierten Zustand die apikale Richtung, und "proximal" ist die Richtung, von welcher her das Verankerungsteil implantiert wird, entsprechend "koronal" im implantierten Zustand.

Im Folgenden wird der Erfindungsgegenstand anhand von bevorzugten Ausführungsbeispielen, welche in den beiliegenden Zeichnungen dargestellt sind, näher erläutert. Es zeigen in teilweise von Figur zu Figur verschiedenen Massstäben:
- Fig. 1a-1c: ein keramisches Dentalimplantat (Verankerungsteil);
- Fig. 2: ein beispielhaftes Abutment;
- Fig. 3a, 3b: eine Ansicht des entlang einer Ebene parallel zur Achse und senkrecht zur Achse geschnittenen Implantatsystem in einem zusammengesetzten Zustand;
- Fig. 4a, 4b: zwei Ansichten eines Einsatzelements;
- Fig. 5: das Einsatzelement beim Einsetzen in das Verankerungsteil mittels Einsetzinstrument;
- Figur 6a: eine Schnittdarstellung des Verankerungsteils mit Einsatzelement und einem Eindrehwerkzeug; und
- Fig. 6b: ein Detail zur Schnittdarstellung von Fig. 6a.

In den Figuren bezeichnen gleiche Bezugszeichen gleiche oder analoge Teile.

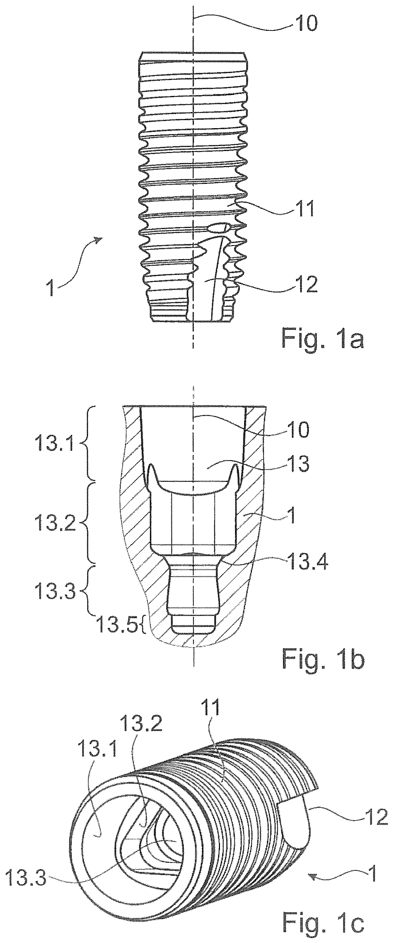

Das Dentalimplantat (Verankerungsteil 1), welches in **Figur 1a** in einer Seitenansicht, in **Figur 1b** entlang der Achse geschnitten (nur ein Ausschnitt rund um die Aussparung 13 herum ist dargestellt) und in **Figur 1c** in einer Schrägansicht von der koronalen Seite her gezeichnet ist, weist ein sich fast über die ganze Länge, fast bis zum koronalen Ende erstreckendes Aussengewinde 11 auf. Das Verankerungsteil 1 hat eine sich nach apikal leicht verjüngende Form, so, dass es im Querschnitt entlang einer Ebene parallel zur Achse 10 als Ganzes bis auf die Gewindevertiefungen und apikale Spannuten 12 leicht konvex gekrümmt ist und als Ganzes stetig von einer koronal ungefähr zylindrischen in eine apikal sich verjüngenden Form übergeht. Das Aussengewinde 11 hat eine nicht-konstante Gewindetiefe und ist selbstschneidend ausgebildet.

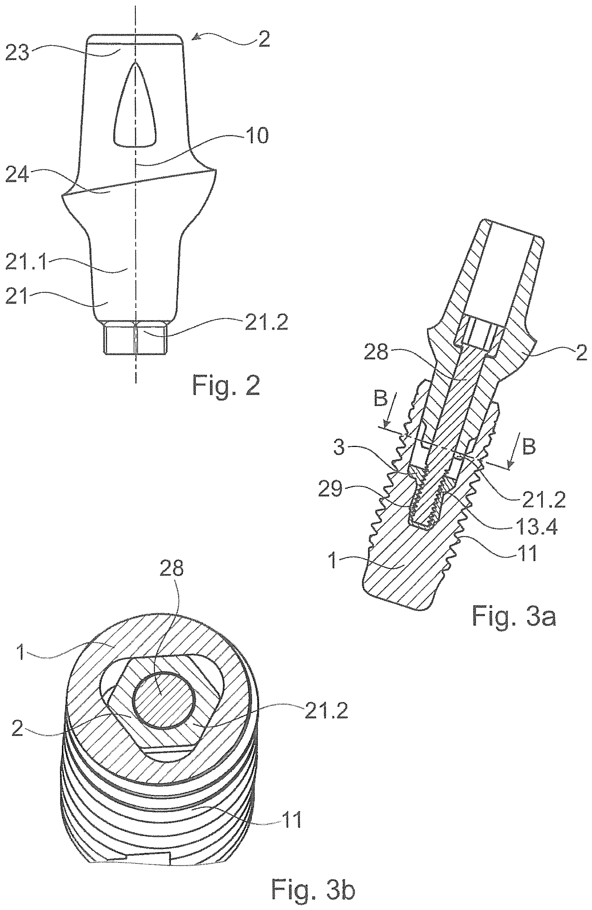

Zum koronalen Ende hin offen ist eine Aussparung 13, in welche im fertig implantierten Zustand des Implantatsystems ein Befestigungspfosten 21 (siehe Figur 2) eines Abutments 2 hineinragt. Die Ausnehmung 13 bildet einen koronalen Abstützbereich 13.1, apikal davon einen Eindrehgeometriebereich 13.2 und apikal von dieser einen Einsatzbereich 13.3 aus. Der Abstützbereich 13.1 weist einen insgesamt konischen Verlauf mit einem sich nach koronal leicht aufweitenden Durchmesser auf. Im Eindrehgeometriebereich 13.2 bildet die Ausnehmung eine Eindrehgeometrie, indem sie nicht rotationssymmetrisch um die Achse 10 verläuft. Im dargestellten Ausführungsbeispiel eine im Querschnitt entlang einer Ebene senkrecht zur Achse als gleichseitiges Dreieck mit abgerundeten Ecken ausgebildet, wobei sie zylindrisch in dem Sinn ist, dass sie entlang der Achse einen konstanten Querschnitt aufweist. Der Einsatzbereich 13.3 ist hier rotationssymmetrisch. Er erweitert sich konisch leicht zur apikalen Seite hin, d.h. in diesem Bereich wird die Ausnehmung apikal eines Halses 13.4 nach apikal im Querschnitt wieder grösser und bildet so einen Hinterschnitt. Ein optionaler Überlängenabschnitt 13.5 kann dem Aufnehmen einer Überlänge der Abutmentschraube und/oder der Fixierungsschraube (ausgeführt in der nachstehenden Beschreibung) dienen.

Das in **Figur 2** dargestellte Abutment weist nebst dem Befestigungspfosten 21 einen koronalen Pfosten 23 zur Befestigung einer Suprakonstruktion auf. Apikal davon ist ein beispielsweise an den erwarteten Verlauf der Gingiva angepasster transgingivaler Bereich 24 ausgebildet. Die Formen sowohl eines solchen transgingivalen Bereichs 24 als auch des Pfostens 23, inklusive dessen Winkel zum Befestigungspfosten und mithin zur Achse 10 sind angepasst an spezifische Bedürfnisse und hängen davon ab, wo im Kiefer das Implantat gesetzt wird oder gesetzt worden ist. Insbesondere kann ein Implantations-Set mit mindestens einem Verankerungsteil mehrere verschiedene Abutments für verschiedene Implantatsionssituationen umfassen.

Am Befestigungspfosten 21 sind eine Abstützpartie 21.1, welche in ihrer Form auf den Abstützbereich 13.1 abgestimmt ist, und apikal davon eine Verdrehsicherungsstruktur 21.2 ausgebildet. Die Verdrehsicherungsstruktur weist eine Sechskantform auf, welche ein Einsetzen in die Eindrehgeometrie in sechs verschiedenen relativen Orientierungen ermöglicht.

Die Kombination einer Eindrehgeometrie mit dreizähliger Symmetrie mit einer Verdrehsicherungsstruktur mit einer höherzähligen Symmetrie hat mehrere wichtige Vorteile: Erstens: Während die Verdrehsicherungsstruktur des Abutments eine höherzählige Symmetrie aufweist und daher das Abutment in einer entsprechend höheren Anzahl von relativen Drehpositionen befestigbar ist, kann ein Eindrehwerkzeug eine (Eindreh-)Aussenstruktur aufweisen, welche im Wesentlichen der Eindrehgeometrie des Implantats entspricht. Dadurch wird es möglich, dass das Eindrehwerkzeug bei einer Implantation des Implantats entlang der ganzen Fläche der Eindrehgeometrie Kraft übertragen kann (kraftübertragende Verbindung), wodurch eine sehr gute Kraftverteilung resultiert und die Tendenz zu Überlastbrüchen reduziert wird. Zweitens ergäbe die Produktion einer gleichzähligen Symmetrie beim Implantat höhere Produktionskosten und ein schlechteres Verdrehspiel.

**Figuren 3a und 3b** zeigen das Implantatsystem im Zustand mit auf das Verankerungsteil aufgesetztem Abutment, in welchem am Abutment eine Suprakonstruktion applizierbar ist. Figur 3b zeigt das System entlang der Ebene B-B in Fig. 3a geschnitten. Das Gewinde 29 der Abutmentschraube 28 wird apikal von einem entsprechenden Innengewinde des Einsatzelements 3 aufgenommen, welches seinerseits im Einsatzbereich 13.3 der Ausnehmung verankert ist. Die Abutmentschraube 28 fixiert das Abutment 2 relativ zum Verankerungsteil gegenüber einem Auseinanderziehen in axialer Richtung. Dabei ist das Abutment im Abstützbereich abgestützt und geführt, indem die Abstützpartie 21.1 dort flächig an der Innenfläche der Ausnehmung anliegt. Die Abutmentschraube 28 spreizt das Einsatzelement 3 beim Eingreifen auf und hält so das Abutment 2 in der Ausnehmung 13 fixiert. Gegenüber Verdrehungen ist das Abutment in dieser Position gesichert, indem die Verdrehsicherungsstruktur 21.2 in den koronalen Bereich der Eindrehgeometrie eingreift, wodurch die hier im Querschnitt sechseckige Verdrehsicherungsstruktur in der hier dreieckigen Eindrehgeometrie rotationsgesichert wird (Fig. 3b).

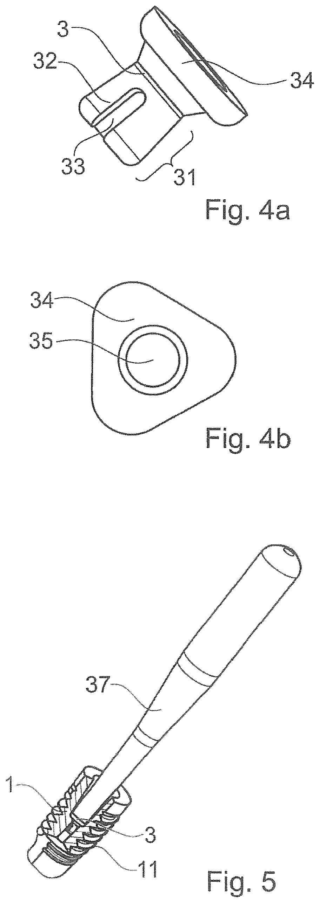

Das in **Figuren 4a und 4b** etwas vergrössert dargestellte Einsatzelement 3 weist nebst einer in den Einsatzbereich 13.3 eingreifenden Einsatzpartie auch einen Kopfbereich 34 auf. Der Kopfbereich 34 ist nicht drehsymmetrisch, sondern in seiner Aussenkontur der Eindrehgeometrie angepasst, so dass das Einsatzelement 3 verdrehsicher in die Eindrehgeometrie 13.2 eingesetzt werden kann.

Die Einsatzpartie 31 ragt in apikale Richtung in den Einsatzbereich 13.3 hinein und weist eine Mehrzahl von voneinander durch Schlitze 33 getrennte Segmente 32 auf, wodurch sich eine Flexibilität gegenüber Deformationen in radialer Richtung ergibt. Zentral erstreckt sich eine Durchgangsöffnung 35 mit Innengewindefunktion, d.h. mit Innengewinde oder mindestens mit einer nach innen ragenden Kante, die mit einem Aussengewinde zusammenwirkt.

Zum Einsetzen des Einsatzelements 3 in das Verankerungsteil 1 kann ein Einsetzinstrument 37 verwendet werden, wie es in **Figur 5** dargestellt ist. Auf dieses ist das Einsatzelement 3 aufgesetzt, insbesondere aufgeschraubt, und zwar so, dass die Einsatzpartie 31 noch nicht nach aussen in eine Position wie in Fig. 4a gezeichnet gespreizt ist oder dass mindestens eine Deformation nach innen nicht verhindert wird. Insbesondere kann ein Gewindezapfen am distalen Ende des Einsetzinstruments 37 nur sehr kurz ausgebildet sein und nur bis zu einer Tiefe des Kopfbereichs 34 in die zentrale Öffnung 35 hineinragen. Dadurch kann die Einsetzpartie durch den Hals 31.4 geschoben werden. Durch eine Drehbewegung des Einsetzinstruments 37 wird dieses vom Einsatzelement gelöst, woraufhin es entfernt wird. Das Einsetzinstrument kann optional im Implantationsset mit dem Einsatzelement (steril) vor-assembliert vorhanden sein.

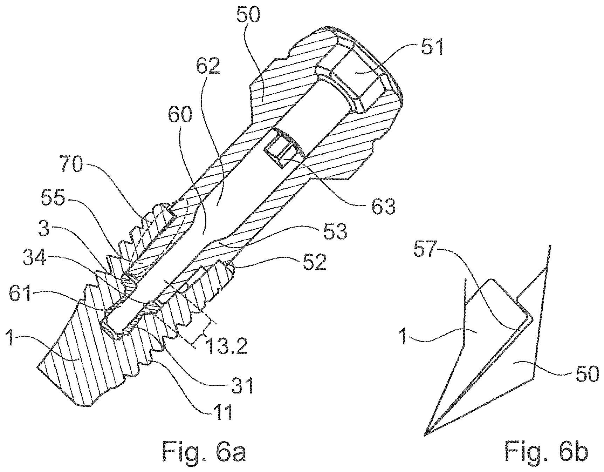

Für die Implantation wird das Verankerungsteil 1 an der vorbereiteten und im Allgemeinen vorgebohrten Stelle im Knochen implantiert. Zu diesem Zweck ist das vorstehend diskutierte Eindrehwerkzeug 50 vorhanden, welches in **Figur 6a** gezeigt ist. Das Eindrehwerkzeug 50 weist einen zentralen, in axialer Richtung verlaufenden und durchgängigen Schraubenkanal auf und wird durch eine Fixierungsschraube 60 mit einem apikalen Aussengewinde 61 und einem koronalen Schraubenkopf 62, welcher an eine innere Schulter 53 im Schraubenkanal gepresst wird, relativ zum Verankerungsteil 1 axial fixiert. Eine äussere Schulter 52 des Eindrehwerkzeugs 50 stösst dabei gegen die koronale Endfläche des Verankerungsteils 1 und bildet so einen Anschlag. Das Befestigen des Eindrehwerkzeugs kann im Wesentlichen kraftfrei geschehen, d.h. es ist nicht nötig, dass das Eindrehwerkzeug mit einer substantiellen Kraft gegen den Anschlag gedrückt wird. Ein Anschlag kann alternativ zum Gezeigten auch durch weiter apikal liegende Strukturen gebildet werden.

Die in die entsprechenden Vertiefungen im Innengewinde des Einsatzelements 3 eingreifenden Gewindekuppen bewirken einen Formschluss zwischen dem Einsatzelement und der Fixierungsschraube 60, und der Schraubenkopf 62 zusammen mit der entsprechenden inneren Schulter 53 des Eindrehwerkzeugs einen Formschluss zwischen Fixierungsschraube 60 und Eindrehwerkzeug 50. Das Einsatzelement seinerseits ist durch einen Formschluss gegen axialen Zug gesichert, welcher Formschluss dadurch bewirkt wird, dass die Einsatzpartie 31 mit einer wie in Fig. 4a dargestellten aussen konischen Form in den konischen Einsatzabschnitt 13.3 eingreift, während der apikale Teil der Fixierungsschraube 60 ein Ausweichen der Segmente radial nach innen verhindert - analog zur Fixierung des Abutments 2, welche in Fig. 3a dargestellt ist.

In dieser Stellung greift die Eingriffpartie 55 des Eindrehwerkzeugs in die Eindrehgeometrie 13.2 ein. Die Eingriffpartie 55 weist eine Querschnittsform auf, welche der Querschnittsform der Eindrehgeometrie entspricht, so dass sie passgenau in diese einschiebbar ist. Im vorliegenden Beispiel ist die Eingriffpartie 55 im Querschnitt dreiecksförmigen (mit abgerundeten Ecken), analog zur in Fig. 1c sichtbaren Querschnittsform der Eindrehgeometrie 13.2. Ein Drehmoment am Eindrehwerkzeug 50 wird daher auf das Verankerungsteil übertragen, wobei die Einleitung dieses Drehmoments flächig entlang des ganzen Bereichs des Überlapps zwischen Eindrehgeometrie 13.2 und Eingriffpartie 55 erfolgt, und zwar aufgrund der axialen Fixierung ohne die Gefahr eines Abrutschens. Das Eindrehwerkzeug 50 kann für das Ansetzen eines Drehmoments in an sich bekannter Art entweder selbst eine Handhabe aufweisen oder aber wie gezeichnet eine Ankopplungsstruktur 51 (hier eine Innen-Sechskantstruktur) zum Ansetzen einer solchen Handhabe oder eines maschinellen Schraubers aufweisen. An der Fixierungsschraube 60 muss im Gegensatz zum Eindrehwerkzeug nie ein grosses Drehmoment angreifen, und eine entsprechende Struktur 63 für einen Schraubendreher kann entsprechend aufgrund der engen Platzverhältnisse filigran ausgestaltet sein.

Von besonderer Bedeutung ist hierbei, dass der Ort, an welchem bei der Drehmomenteinleitung ins Verankerungsteil 1 erfolgt, nicht am koronalen Ende im Bereich der Abstützpartie 13.1 ist, sondern apikal davon im Innern der Ausnehmung 13. Der besonders empfindliche koronale Bereich des Verankerungsteils ist weitgehend entlastet.

**Figur 6b** zeigt ein Detail, welches ungefähr den in Fig. 6a durch eine gestrichelte Ellipse hervorgehobenen Bereich 70 darstellt. Man sieht, dass das in der Eindrehgeometrie geführte Eindrehwerkzeug 50 in seiner Orientierung relativ zum Verankerungsteil 1 so fixiert ist, dass sich koronal ein unter Umständen kleiner Spalt 57 ergibt, aufgrund einer leichten Aufweitung der Ausnehmung im Abstützbereich. Ein solcher Spalt kann umlaufend sein, wobei auch nicht ausgeschlossen ist, dass im Gegensatz zur dargestellten Ausführungsform der Querschnitt der Eingriffpartie 55 axial bis zur äusseren Schulter 52 hochgezogen ist, so dass der Spalt 57 eine in Umfangsrichtung stark variierende Breite hat.

**Figur 7** zeigt eine alternative Ausführungsform eines Verankerungsteils. Im Kontrast zu der vorstehenden Ausführungsform ist kein Einsatzelement mit Innengewindefunktion vorhanden, sondern das Verankerungsteil 1 selbst besitzt ein Innengewinde 14. Dieses ist in einem apikal des Eindrehgeometriebereichs 13.2 ausgebildeten Fixierungsbereich (13.6) ausgebildet und auf die Aussengewinde der Fixierungsschraube 60 und der Abutmentschraube 28 abgestimmt. Daher wirkt das Innengewinde beim Zusammenwirken von Verankerungsteil 1 einerseits und Abutment 2 beziehungsweise Eindrehwerkzeug 50 andererseits analog zum Einsatzelement.

Das Verankerungsteil 1 und vorzugsweise auch das Abutment sind aus einem keramischen Werkstoff, insbesondere einer Zirkonoxidkeramik gefertigt. Sie können insbesondere aus einem bereits gebrannten Werkstück durch abtragende Verfahren (schleifen, bohren, fräsen, etc.) in ihre Form gebracht werden. Weitere abtragende oder auftragende Verfahrensschritte wie mindestens bereichsweise Aufrauhung durch Sandstrahlen oder Einwirken eines Laserstrahls oder Anlagern einer Oberflächenbeschichtung etc. sind möglich.

## Patentansprüche

1. Dentalimplantatsystem, aufweisend,
• Ein Verankerungsteil (1) zur Verankerung in Knochengewebe, wobei das Verankerungsteil aus einem keramischen Werkstoff gefertigt ist,
o Wobei das Verankerungsteil ein Aussengewinde (11), welches eine Achse (10) definiert, und eine zu einem koronalen Ende hin offene Aussparung (13) für einen Eingriff eines Befestigungspfostens (21) eines Abutments (2) aufweist,
• Und ein Eindrehwerkzeug (50),
• Wobei die Aussparung (13) des Verankerungsteils eine Innenstruktur mit einer Eindrehgeometrie (13.2) zum Zusammenwirken mit einer entsprechenden Aussenstruktur des Eindrehwerkzeugs aufweist, und wobei das Eindrehwerkzeug eine Eingriffpartie (55) mit der entsprechenden Aussenstruktur besitzt,
• Wobei die Aussparung ferner koronal der Eindrehgeometrie einen sich bis zu einem koronalen Ende des Verankerungsteils (1) erstreckenden Abstützbereich (13.1) bildet, zum Abstützen einer Abstützpartie (21.1) des Abutments am Verankerungsteil,
• Wobei das Eindrehwerkzeug (50) in einer Eindrehposition, in welcher die Eingriffpartie (55) in die Eindrehgeometrie (13.2) eingreift, relativ zum Verankerungsteil gegenüber axialen Relativbewegungen fixierbar ist,
o Und wobei das Eindrehwerkzeug in der Eindrehposition in seiner Orientierung relativ zum Verankerungsteil durch das Zusammenwirken der Eindrehgeometrie und der Eingriffpartie geführt wird und ein Drehmoment am Eindrehwerkzeug (50) den Abstützbereich (13.1) nicht belastet, indem es am koronalen Ende des Verankerungsteils, an einer Mündung der Aussparung, zwischen Eindrehwerkzeug und Verankerungsteil keine Berührung zwischen Eindrehwerkzeug und Verankerungsteil gibt.

2. Implantatsystem nach Anspruch 1, ferner aufweisend das Abutment (2) mit dem Befestigungspfosten (21), der die Abstützpartie (21.1) aufweist, die in ihrer Form passgenau auf den Abstützbereich (13.1) abgestimmt ist, wobei die Abstützpartie (21.1) und der Abstützbereich (13.1) einen je einen konischen Abschnitt aufweisen, die eine paarweise aufeinander angepasste konische Klemmfläche ausbilden, wodurch das Implantat und das Abutment durch eine Klemmverbindung miteinander verbindbar sind..

3. Implantatsystem nach Anspruch 2, wobei das Abutment ferner apikal der Abstützpartie (21.1) eine Verdrehsicherungsstruktur (21.2) aufweist, welche verdrehsichernd in die Eindrehgeometrie (13.2) eingreift.

4. Implantatsystem nach einem der vorangehenden Ansprüche, wobei das Verankerungsteil (1) als bone-level-Verankerungsteil ausgebildet ist.

5. Implantatsystem nach einem der vorangehenden Ansprüche, wobei die Form des Abstützbereichs (13.1) und des Eindrehwerkzeugs so aufeinander abgestimmt sind, dass, wenn das Eindrehwerkzeug in der Eindrehposition geführt und axial fixiert ist, ein bei einer Kraft in eine beliebige radiale Richtung auf ein proximales Ende des Eindrehwerkzeugs entstehendes Drehmoment von der Eindrehgeometrie (13.2) aufgenommen wird und das koronale Ende nicht belastet, und wobei die Form des Abstützbereichs (13.1) und des Eindrehwerkzeugs so aufeinander abgestimmt sind, dass, wenn das Eindrehwerkzeug in der Eindrehposition geführt und axial fixiert ist, mindestens am koronalen Ende ein sich in Umfangsrichtung erstreckender Spalt zwischen dem Eindrehwerkzeug und der Innenwand der Aussparung ausgebildet ist.

6. Implantatsystem nach einem der vorangehenden Ansprüche, ferner aufweisend ein vom Eindrehwerkzeug (50) separates Fixierungselement (60) für das Fixieren des Eindrehwerkzeugs am Verankerungsteil gegenüber axialen Relativbewegungen.

7. Implantatsystem nach Anspruch 6, wobei das Fixierungselement (60) eine Fixierungsschraube ist.

8. Implantatsystem nach einem der vorangehenden Ansprüche, wobei die Fixierung gegenüber axialen Relativbewegungen durch einen Formschluss in Bezug auf axiale Richtungen bewirkt ist, insbesondere durch ein Gewinde oder eine Bajonettkopplung.

9. Implantatsystem nach Anspruch 8, wobei eine Fixierungsstruktur mit Hinterschnitt für den Formschluss apikal der Eindrehstruktur angeordnet ist.

10. Implantatsystem nach Anspruch 10, ferner aufweisend ein Einsatzelement (3), welches die Fixierungsstruktur aufweist und mindestens zum Teil in einem Einsatzbereich (13.3) in der Aussparung (13) positionierbar ist, welcher apikal der Eindrehstruktur (13.2) angeordnet ist, wobei der Einsatzbereich einen Hinterschnitt aufweist, wodurch das Einsatzelement (3) formschlüssig in Bezug auf axialen Zug im Einsatzbereich fixierbar ist, und wobei der Einsatzbereich (13.3) beispielsweise mindestens teilweise konisch mit einem sich nach apikal erweiternden Querschnitt ausgebildet ist.

11. Implantatsystem nach Anspruch 10, mit einem vom Eindrehwerkzeug (50) separaten Fixierungselement (60), wobei das Einsatzelement (3) durch das Fixierungselement in den Hinterschnitt aufspreizbar und/oder in einer in den Hinterschnitt aufgespreizten Position fixierbar ist, und wobei das Einsatzelement eine Mehrzahl von durch Schlitze (33) getrennten Segmenten (32) aufweist, die radial bewegbar und in den Hinterschnitt aufspreizbar sind.

12. Implantatsystem nach einem der Ansprüche 10 oder 11, ferner aufweisend ein Einsetzinstrument (37) mit einem distalen Ende, an welchem das Einsatzelement lösbar befestigbar ist, so, dass das am Einsetzinstrument befestigte Einsatzelement im Einsatzbereich (13.3) positionierbar ist.

13. Implantatsystem nach Anspruch 8 oder 9, wobei das Verankerungsteil (1) ein Innengewinde (14) aufweist, welches die Fixierungsstruktur bildet.

14. Implantatsystem nach Anspruch 8,
o wobei gemäss einer ersten Option die Aussparung (13) apikal der Eindrehstruktur (13.2) einen Einsatzbereich (13.3) mit Hinterschnitt aufweist und das Implantatsystem ferner ein Einsatzelement aufweist, welches mindestens zum Teil im Einsatzbereich (13.3) positionierbar ist, wobei das Einsatzelement eine zur koronalen Seite her offene innere Öffnung (35) aufweist, die mit einer in Bezug auf axiale Richtungen hinterschnittenen Fixierungsstruktur versehen ist,
o wobei gemäss einer zweiten Option die Aussparung (13) apikal der Eindrehstruktur einen Fixierungsbereich (13.6) mit einer mit einer in Bezug auf axiale Richtungen hinterschnittenen Fixierungsstruktur aufweist,
• wobei ferner das Fixierungselement (60) in einem apikalen Bereich eine zum Eingriff in die Fixierungsstruktur ausgeformte Befestigungsstruktur aufweist,
• wobei das Eindrehwerkzeug einen zentralen, in axialer Richtung verlaufenden durchgängigen Kanal aufweist, in welchen das Fixierungselement von koronal her einbringbar ist, wenn das Eindrehwerkzeug in der Eindrehposition ist, so dass die Befestigungsstruktur in die Fixierungsstruktur eingreift,
• und wobei das Fixierungselement eingerichtet ist, durch Eingriff der Befestigungsstruktur in die Fixierungsstruktur das Eindrehwerkzeug gegen das Verankerungsteil zu sichern, um die Fixierung gegenüber axialen Relativbewegungen zu bilden.

15. Implantatsystem nach Anspruch 14, wobei die Fixierungstruktur ein Innengewinde (14) oder eine nach innen ragende, mit einem Aussengewinde zusammenwirkende Kante aufweist und die Befestigungsstruktur ein Aussengewinde oder eine nach aussen ragende, mit einem Innengewinde zusammenwirkende Kante aufweist, und/oder wobei das Fixierungselement (60) einen koronalen Kopf (62) besitzt, der mit einer Innenschulter (53) im durchgehenden Kanal zusammenwirkt, um das Eindrehwerkzeug (50) gegen das Verankerungsteil zu sichern, wenn die Befestigungsstruktur in die Fixierungsstruktur eingreift.

## Claims

1. Dental implant system, comprising
• an anchoring part (1) for anchoring in bone tissue, wherein the anchoring part is made of a ceramic material,
o wherein the anchoring part comprises an outer thread (11), which defines an axis (10), and a recess (13) which is open towards a coronal end and serves for engagement of a fastening post (21) of an abutment (2),
• and a screw-in tool (50),
• wherein the recess (13) of the anchoring part comprises an inner structure with a screw-in geometry (13.2) for interaction with a corresponding outer structure of the screw-in tool, and wherein the screw-in tool has an engagement portion (55) with the corresponding outer structure,
• wherein the recess moreover forms, in the coronal direction from the screw-in geometry, a support region (13.1) which extends as far as a coronal end of the anchoring part (1), for supporting a support portion (21.1) of the abutment on the anchoring part,
• wherein the screw-in tool (50), in a screw-in position in which the engagement portion (55) engages in the screw-in geometry (13.2), can be fixed against axial relative movements relative to the anchoring part,
o and wherein, in the screw-in position, the screw-in tool is guided in its orientation relative to the anchoring part by the interaction of the screw-in geometry and of the engagement portion, and a torque on the screw-in tool (50) does not subject the support region (13.1) to a load since, at the coronal end of the anchoring part, at a mouth of the recess, between screw-in tool and anchoring part there is no contact between screw-in tool and anchoring part.

2. Implant system according to Claim 1, moreover comprising the abutment (2) with the fastening post (21) which comprises the support portion (21.1) which is matched in its shape precisely to the support region (13.1), wherein the support portion (21.1) and the support region (13.1) each comprise a conical portion, these conical portions forming a pair of conical clamping surfaces which are adapted to each other in pairs, as a result of which the implant and the abutment are connectable to each other by a clamping connection.

3. Implant system according to Claim 2, wherein the abutment moreover comprises, in the apical direction from the support portion (21.1), a rotation-preventing structure (21.2) which engages with a rotation-preventing effect in the screw-in geometry (13.2).

4. Implant system according to one of the preceding claims, wherein the anchoring part (1) is designed as a bone-level anchoring part.

5. Implant system according to one of the preceding claims, wherein the shape of the support region (13.1) and the shape of the screw-in tool are matched to each other such that, when the screw-in tool is guided in the screw-in position and axially fixed, a torque acting on a proximal end of the screw-in tool, in the event of a force in any desired radial direction, is taken up by the screw-in geometry (13.2) and does not subject the coronal end to a load, and wherein the shape of the support region (13.1) and the shape of the screw-in tool are matched to each other such that, when the screw-in tool is guided in the screw-in position and axially fixed, a circumferentially extending gap is formed between the screw-in tool and the inner wall of the recess, at least at the coronal end.

6. Implant system according to one of the preceding claims, moreover comprising a fixing element (60), separate from the screw-in tool (50), for fixing the screw-in tool on the anchoring part with respect to axial relative movements.

7. Implant system according to Claim 6, wherein the fixing element (60) is a fixing screw.

8. Implant system according to one of the preceding claims, wherein the fixing with respect to axial relative movements is effected by a form-fit lock in relation to axial directions, in particular by a thread or a bayonet coupling.

9. Implant system according to Claim 8, wherein a fixing structure with an undercut for the form-fit lock is arranged in the apical direction from the screw-in structure.

10. Implant system according to Claim 10, moreover comprising an insert element (3) which comprises the fixing structure and can be positioned at least partially in the recess (13) in an insert region (13.3) arranged in the apical direction from the screw-in structure (13.2), wherein the insert region has an undercut, as a result of which the insert element (3) can be fixed in the insert region with form-fit engagement in relation to axial tension, and wherein the insert region (13.3) is for example designed at least partially conically with an apically widening cross section.

11. Implant system according to Claim 10, comprising a fixing element (60) separate from the screw-in tool (50), wherein the insert element (3) can be spread open into the undercut by the fixing element and/or can be fixed in a spread open position in the undercut, and wherein the insert element has a plurality of segments (32) which are separated by slits (33) and which are radially movable and are able to spread open into the undercut.

12. Implant system according to either of Claims 10 and 11, moreover comprising an insert instrument (37) with a distal end on which the insert element can be fastened releasably, such that the insert element fastened to the insert instrument can be positioned in the insert region (13.3).

13. Implant system according to Claim 8 or 9, wherein the anchoring part (1) has an inner thread (14), which forms the fixing structure.

14. Implant system according to Claim 8,
o wherein, according to a first option, the recess (13) comprisies, in the apical direction from the screw-in structure (13.2), an insert region (13.3) with undercut, and the implant system moreover comprises an insert element which can be positioned at least partially in the insert region (13.3), wherein the insert element comprises an inner opening (35) which is open towards the coronal side and which is provided with a fixing structure that is undercut in relation to axial directions,
o wherein, according to a second option, the recess (13) comprises, in the apical direction from the screw-in structure, a fixing region (13.6) with a fixing structure undercut in relation to axial directions,
• wherein moreover the fixing element (60) comprises, in an apical region, a fastening structure configured to engage in the fixing structure,
• wherein the screw-in tool comprises a central continuous channel which extends in the axial direction and into which the fixing element can be introduced from the coronal direction when the screw-in tool is in the screw-in position, such that the fastening structure engages in the fixing structure,
• and wherein the fixing element is configured to secure the screw-in tool against the anchoring part by engagement of the fastening structure in the fixing structure, in order to form the fixing in relation to axial relative movements.

15. Implant system according to Claim 14, wherein the fixing structure comprises an inner thread (14) or an inwardly protruding edge interacting with an outer thread, and the fastening structure comprises an outer thread or an outwardly protruding edge interacting with an inner thread, and/or wherein the fixing element (60) has a coronal head (62) which interacts with an inner shoulder (53) in the continuous channel in order to secure the screw-in tool (50) against the anchoring part when the fastening structure engages in the fixing structure.

## Revendications

1. Système d'implant dentaire, comprenant
• une partie d'ancrage (1) destinée à l'ancrage dans un tissu osseux, la partie d'ancrage étant en matériau céramique,
O la partie d'ancrage comportant un filetage extérieur (11), qui définit un axe (10), et un évidement (13) qui est ouvert vers une extrémité coronale et qui est destiné à l'engagement d'une colonnette de fixation (21) d'une butée (2),
• et un outil de vissage (50),
• l'évidement (13) de la partie d'ancrage comportant une structure intérieure pourvue d'une géométrie de vissage (13.2) pour coopérer avec une structure extérieure correspondante de l'outil de vissage, et l'outil de vissage comportant une partie d'engagement (55) pourvue de la structure extérieure correspondante,
• l'évidement formant en outre, du côté coronal de la géométrie vissée, une zone de support (13.1) qui s'étend jusqu'à une extrémité coronale de la partie d'ancrage (1) et qui est destinée à supporter une partie de support (21.1) de la butée au niveau de la partie d'ancrage,
• l'outil de vissage (50) pouvant être fixé relativement à la partie d'ancrage par rapport à des mouvements relatifs axiaux dans une position de vissage dans laquelle la partie d'engagement (55) s'engage dans la géométrie de vissage (13.2),
O et l'outil de vissage étant guidé dans la position de vissage dans son orientation relativement à la pièce d'ancrage par coopération de la géométrie de vissage et de la pièce d'engagement et un couple au niveau de l'outil de vissage (50) n'exerçant pas de contrainte sur la zone de support (13.1) du fait qu'il n'y a aucun contact entre l'outil de vissage et la partie d'ancrage à l'extrémité coronale de la partie d'ancrage et au niveau d'une embouchure de l'évidement, entre l'outil de vissage et la partie d'ancrage.

2. Système d'implant selon la revendication 1, comportant en outre la butée (2) pourvue de la colonnette de fixation (21), qui comporte la partie de support (21.1) dont la forme est adaptée de manière précise à la zone de support (13.1), la partie de support (21.1) et la zone de support (13.1) comportant chacune une portion conique qui forme des surfaces de serrage coniques appariées l'une à l'autre de sorte que l'implant et la butée peuvent être reliés l'un à l'autre par une liaison par serrage.

3. Système d'implant selon la revendication 2, la butée comportant en outre du côté apical de la partie de support (21.1) une structure anti-rotation (21.2) qui s'engage dans la géométrie de vissage (13.2) de manière à bloquer la rotation.

4. Système d'implant selon l'une des revendications précédentes, la partie d'ancrage (1) étant conçue comme une partie d'ancrage au niveau de l'os.

5. Système d'implant selon l'une des revendications précédentes, la forme de la zone de support (13.1) et celle de l'outil de vissage étant adaptées l'une à l'autre de telle sorte que, lorsque l'outil de vissage est guidé et fixé axialement dans la position de vissage, un couple, survenant lorsqu'une force est exercée dans une direction radiale quelconque sur une extrémité proximale de l'outil de vissage, soit appliqué par la géométrie de vissage (13.2) et n'exerce pas de contrainte sur l'extrémité coronale et la forme de la zone de support (13.1) et celle de l'outil de vissage étant adaptées l'une à l'autre de telle sorte que, lorsque l'outil de vissage est guidé dans la position de vissage et est fixé axialement, un espace s'étendant circonférentiellement soit ménagé au moins à l'extrémité coronale entre l'outil de vissage et la paroi intérieure de l'évidement.

6. Système d'implant selon l'une des revendications précédentes, comportant en outre un élément de fixation (60) séparé de l'outil de vissage (50) et destiné à fixer l'outil de vissage à la partie d'ancrage par rapport à des mouvements relatifs axiaux.

7. Système d'implant selon la revendication 6, l'élément de fixation (60) étant une vis de fixation.

8. Système d'implant selon l'une des revendications précédentes, la fixation par rapport à des mouvements relatifs axiaux étant réalisée par une liaison par complémentarité de formes par rapport à des directions axiales, notamment par un filetage ou un accouplement à baïonnette.

9. Système d'implant selon la revendication 8, une structure de fixation pourvue d'une contre-dépouille destinée à la liaison par complémentarité de formes étant disposée du côté apical de la structure de vissage.

10. Système d'implant selon la revendication 10, comprenant en outre un élément d'insertion (3) qui comporte la structure de fixation et qui peut être positionné au moins en partie dans une zone d'insertion (13.3) de l'évidement (13), qui est disposée du côté apical de la structure de vissage (13.2), la zone d'insertion comportant une contre-dépouille de sorte que l'élément d'insertion (3) peut être fixé par complémentarité de formes par rapport à une traction axiale dans la zone d'insertion, et la zone d'insertion (13.3) étant par exemple au moins partiellement conique de section transversale s'élargissant du côté apical.

11. Système d'implant selon la revendication 10, comprenant un élément de fixation (60) séparé de l'outil de vissage (50), l'élément d'insertion (3) pouvant être écarté dans la contre-dépouille par l'élément de fixation et/ou pouvant être fixé dans une position écartée dans la contre-dépouille, et l'élément d'insertion comportant une pluralité de segments (32) qui sont séparés par des fentes (33), qui peuvent être déplacés radialement et écartés dans la contre-dépouille.

12. Système d'implant selon l'une des revendications 10 ou 11, comportant en outre un instrument d'insertion (37) pourvu d'une extrémité distale à laquelle l'élément d'insertion peut être immobilisé de manière amovible, de sorte que l'élément d'insertion, immobilisé à l'instrument d'insertion, peut être positionné dans la zone d'insertion (13.3).

13. Système d'implant selon la revendication 8 ou 9, la partie d'ancrage (1) comportant un filetage intérieur (14) qui forme la structure de fixation.

14. Système d'implant selon la revendication 8,
O selon une première option, l'évidement (13) comportant du côté apical de la structure de vissage (13.2) une zone d'insertion (13.3) pourvue d'une contre-dépouille et le système d'implant comportant en outre un élément d'insertion qui peut être positionné au moins en partie dans la zone d'insertion (13.3), l'élément d'insertion comportant une ouverture intérieure (35) qui est ouverte vers le côté coronal et qui est pourvue d'une structure de fixation en contre-dépouille par rapport aux directions axiales,
O selon une deuxième option, l'évidement (13) comportant du côté apical de la structure de vissage une zone de fixation (13.6) pourvue d'une structure de fixation en contre-dépouille par rapport aux directions axiales,
• l'élément de fixation (60) comportant en outre une structure d'immobilisation conçue pour s'engager dans la structure de fixation dans une région apicale,
• l'outil de vissage comportant un canal central continu qui s'étend dans la direction axiale et dans lequel l'élément de fixation peut être introduit depuis le côté coronal lorsque l'outil de vissage est dans la position de vissage de sorte que la structure d'immobilisation s'engage dans la structure de fixation,
• et l'élément de fixation étant adapté pour fixer l'outil de vissage contre la partie d'ancrage par engagement de la structure d'immobilisation dans la structure de fixation, afin de former la fixation par rapport à des mouvements relatifs axiaux.

15. Système d'implant selon la revendication 14, la structure de fixation comportant un filetage intérieur (14) ou un bord saillant vers l'intérieur et coopérant avec un filetage extérieur et la structure d'immobilisation comportant un filetage extérieur ou un bord saillant vers l'extérieur et coopérant avec un filetage intérieur, et/ou l'élément de fixation (60) possédant une tête coronale (62) qui coopère avec un épaulement intérieur (53) dans le canal continu afin de fixer l'outil de vissage (50) contre la partie d'ancrage lorsque la structure d'immobilisation s'engage dans la structure de fixation.
